# EUROPEAN PATENT APPLICATION

(11) **EP 4 607 328 A1**
(43) Date of publication of application: **27.08.2025**
(21) Application number: 23894774.1
(22) Date of filing: 20.09.2023
(51) Int. Cl.: G06F 3/04842, G06F 3/16, G06F 1/16, G06Q 50/10, G06T 19/00, G06F 3/0481, G10L 15/05, G10L 15/08

(54) **ELECTRONIC DEVICE AND METHOD FOR REPRESENTING VISUAL OBJECT IN VIRTUAL ENVIRONMENT**

(30) Priority: 23.11.2022 KR 20220158230; 13.12.2022 KR 20220173757
(71) Applicant: Samsung Electronics Co., Ltd., Suwon-si, Gyeonggi-do 16677 (KR)
(72) Inventor: YOON, Jihyeok, Suwon-si, Gyeonggi-do 16677 (KR); KIM, Jooyoung, Suwon-si, Gyeonggi-do 16677 (KR); KIM, Kihwan, Suwon-si, Gyeonggi-do 16677 (KR)
(74) Representative: Gulde & Partner
(86) International application number: PCT/KR2023/014320
(87) International publication number: WO 2024/111843

(57) **Abstract**

Provided is an electronic device. This electronic device may comprise a display. The electronic device may comprise a processor. The processor may be configured to display a virtual environment comprising a visual object through the display. The processor may be configured to obtain voice information with respect to the visual object while the virtual environment is displayed. The processor may be configured to identify at least one word from the voice information. The processor may be configured to identify that a first word from among the at least one word corresponds to a reference value. The processor may be configured to change the first word to a second word on the basis that the first word corresponds to the reference value. The processor may be configured to display an animation representing that at least one phrase comprising the second word is uttered, in the virtual environment through the visual object and the display.

## Description

### [Technical Field]

The following descriptions relate to an electronic device and a method for representing a visual object in a virtual environment.

### [Background Art]

In order to provide enhanced user-experience, an electronic device that provides a virtual reality (VR) service displaying a virtual space or an augmented reality (AR) displaying information generated by a computer in association with an external object in the real-world is being developed. The electronic device may include a wearable device. For example, the wearable device may include a VR device, an AR glass, and a head-mounted device (HMD).

### [Disclosure]

### [Technical Solution]

A wearable electronic device is provided. An electronic device may include a display. The electronic device may include a processor. The processor may be configured to display, via the display, a virtual environment including a visual object. The processor may be configured to obtain voice information with respect to the visual object, while the virtual environment is displayed. The processor may be configured to identify at least one word from the voice information. The processor may be configured to identify that a first word from among the at least one word corresponds to a reference value. The processor may be configured to, based on the first word corresponding to the reference value, change the first word to a second word. The processor may be configured to display, via the display, an animation representing uttering the at least one word including the second word through the visual object in the virtual environment.

A method performed by an electronic device is provided. The method may include displaying, via a display of the electronic device, a virtual environment including a visual object. The method may include obtaining voice information with respect to the visual object while the virtual environment is displayed. The method may include identifying at least one word from the voice information. The method may include identifying that a first word from among the at least one word corresponds to a reference value. The method may include, based on the first word corresponding to the reference value, changing the first word to a second word. The method may include displaying, via the display, an animation representing uttering the at least one word including the second word through the visual object in the virtual environment.

### [Brief Description of Drawings]

FIG. 1 is a block diagram of an electronic device in a network environment according to various embodiments.
FIG. 2A is an example block diagram of a method for representing a visual object in a virtual environment according to an embodiment of the disclosure.
FIG. 2B illustrates an example of functional components of an electronic device for representing a visual object in a virtual environment according to an embodiment of the disclosure.
FIG. 3 is a flowchart illustrating an example of a method for expressing a visual object in a virtual environment according to an embodiment of the disclosure.
FIG. 4 is a flowchart illustrating an example of a method for processing input information according to an embodiment of the disclosure.
FIG. 5 illustrates an example of a method for predicting input information including a plurality of words according to an embodiment of the present disclosure.
FIG. 6 illustrates an example of identifying whether a word corresponds to a reference value according to an embodiment of the disclosure.
FIG. 7 illustrates an example of identifying an area of a visual object to change an animation in a virtual environment according to an embodiment of the disclosure.
FIG. 8 illustrates an example of identifying an animation of a visual object, based on information about a place in a virtual environment according to an embodiment of the disclosure.
FIG. 9 is a flowchart illustrating an example of identifying an animation of a visual object, based on a relationship between the visual object and another visual object, according to an embodiment of the disclosure.
FIG. 10A illustrates an example of changing an animation of a visual object in a virtual environment according to an embodiment of the disclosure.
FIG. 10B illustrates another example of changing an animation of a visual object in a virtual environment according to an embodiment of the disclosure.
FIG. 11 illustrates an example of a method for representing a visual object in a virtual environment according to an embodiment of the disclosure.

### [Mode for Carrying out Invention]

The terms used in the disclosure are merely used to better describe a certain embodiment and may not be intended to limit the scope of other embodiments. A singular expression may include a plural expression, unless the context explicitly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

As used in the following description, terms referring to a configuration of a device (e.g., processor, camera, display, module, etc.), terms referring to operational states (e.g., step, operation, procedure), terms referring to signals (e.g., signal, information, etc.), terms referring to data (e.g., parameter, value, etc.) are exemplified for convenience of explanation. Therefore, the present disclosure is not limited to the terms described below, and other terms having equivalent technical meanings may be used.

Further, throughout the disclosure, an expression, such as e.g., 'above (more than)' or 'below (less than)' may be used to determine whether a specific condition is satisfied or fulfilled, but it is merely a description for expressing an example and is not intended to exclude the meaning of 'more than or equal to' or 'less than or equal to'. A condition described as 'more than or equal to' may be replaced with an expression, such as 'more than', a condition described as 'less than or equal to' may be replaced with an expression, such as 'less than', and a condition described as 'more than or equal to and below' may be replaced with 'more than and less than or equal to', respectively. Furthermore, hereinafter, 'A' to 'B' means at least one of the elements from A (inclusive of A) to B (inclusive of B).

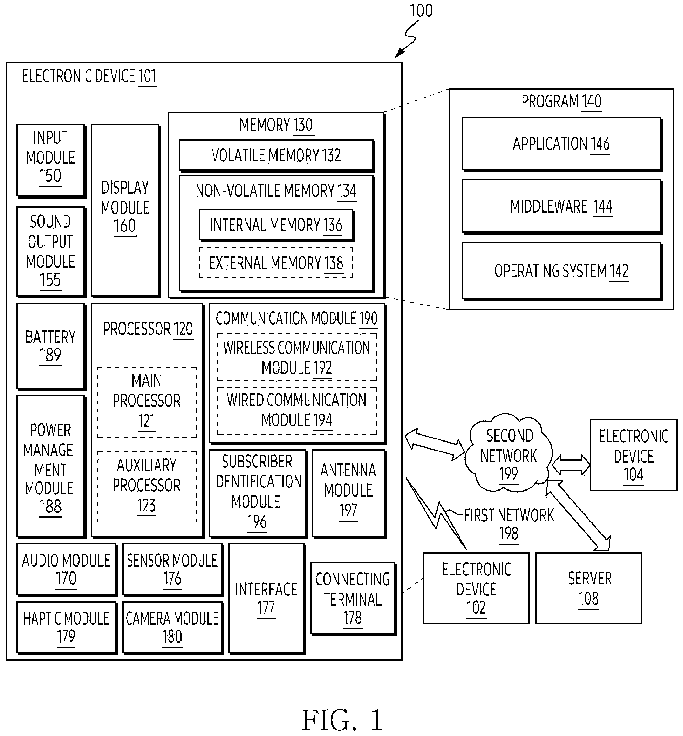

FIG. 1 is a block diagram of an electronic device in a network environment according to an embodiment.

FIG. 1 is a block diagram of an electronic device in a network environment 100 according to an embodiment. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may be a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The metaverse is a compound word of the English word 'meta', which means "virtual", "transcendence," and so on, and "universe," which means the universe, and refers to a three-dimensional virtual world where social, economic, and cultural activities such as the real world take place. The metaverse is a concept that has evolved one step further than virtual reality (VR, a state-of-the-art technology that allows people to experience the real world in a computer-generated virtual world), and it is characterized by being able to engage in social and cultural activities such as a real life rather than just enjoying games or virtual reality using avatars. Such metaverse service may be provided in at least two forms. The first is to provide the service to a user using a server, and the second is to provide the service through individual contact between users.

For example, an environment that provides a metaverse service may include a server that provides the metaverse service, a network (e.g., an access point, AP) connecting the server to each user terminal, and a user terminal that accesses the server through a network to use the service by inputting and outputting the metaverse service to the user. Such a case, the server provides a virtual space so that the user terminal may operate in a virtual space. Further, the user terminal may install a software agent or software application for accessing the virtual space provided by the server to express information provided by the server to the user, or transmit information that the user wants to express in the virtual space to the server. The software agent or software application may be provided directly through the server, downloaded from a public server, or embedded when purchasing a terminal.

As another example, an environment that provides a metaverse service may include a first user terminal that provides the metaverse service, a network (e.g., an access point, AP) connecting each user terminal, and a second user terminal that connects to a server through the network to input and output the metaverse service to a user, thereby allowing the service to be used. In this case, the first user terminal may serve as a server that provides the metaverse service. In other words, a metaverse environment may be configured only by a connection between the devices.

As described above, the user terminal may be made of various form factors and may include an output device that provides an image and/or sound to a user, and an input device for inputting information to a metaverse service. For example, the user terminal may include a smartphone, an augmented reality (AR) device (e.g., an AR glass), a virtual reality (VR) device, a mixed reality (MR) device, a video through (VST) device, a TV or projector with input/output capability, a computer, and so on. Hereinafter, in the present disclosure, the user terminal may be referred to as an electronic device or a wearable device (e.g., the electronic device 101 of FIG. 1).

The avatar may refer to a visual object corresponding to a user of an electronic device or a wearable device in a virtual environment of a metaverse service. As interest in the metaverse grows, crimes using avatars in a virtual environment may increase. A user may use the avatar to utter words and actions that cause sexual shame, disgust, or discomfort to other users. For example, the user may damage other users by displaying inappropriate expressions through the avatar using voice chat, avatar expression, or chat. The inappropriate expression may include swear words, expletives, sexual shame, acts that cause disgust, or makes them feel unpleasant. Hereinafter, embodiments of the disclosure propose a method of preventing the user from being offended by identifying an inappropriate expression in information input in a virtual environment and converting an expression of an avatar that may be generated based on the identified expression into another expression. The avatar may be displayed as a visual object to the user via a display of an electronic device or a wearable device (e.g., electronic device 101 of FIG. 1).

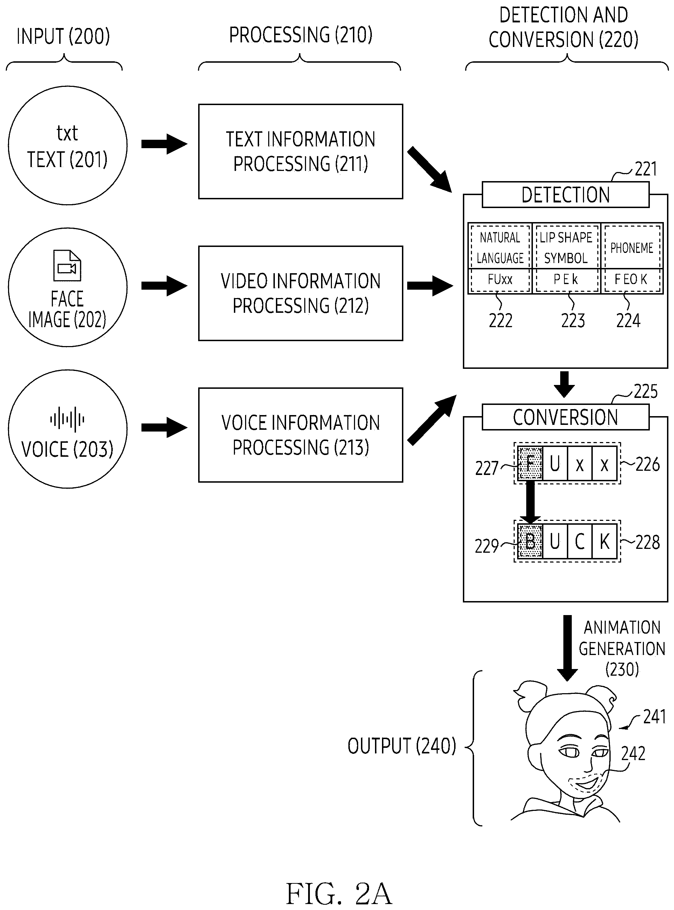

FIG. 2A is an example block diagram of a method for representing a visual object in a virtual environment according to an embodiment of the disclosure.

The virtual environment may represent a virtual space of a metaverse service provided through an electronic device (e.g., the electronic device 101 of FIG. 1). The visual object may represent an avatar in the virtual environment corresponding to the user. The user may include a user of an external electronic device different from the electronic device. Hereinafter, the method of FIG. 2A may be performed with an electronic device (e.g., the electronic device 101 of FIG. 1). For example, the method of FIG. 2A may be performed by the processor of the electronic device (e.g., the processor 120 of FIG. 1).

FIG. 2A illustrates a simplified block diagram of a method of representing a visual object in a virtual environment. For example, the method may include an input operation 200, a processing operation 210, a detection and conversion operation 220, a generation operation 230, and an output operation 240.

According to an embodiment, in the input operation 200, the processor may identify information from a user of the electronic device and an external electronic device, or a server related to the virtual environment. The information may be referred to as input information.

According to an embodiment, the input information may be obtained with respect to a visual object in relation to the virtual environment. The input information may be obtained with respect to a visual object corresponding to a user of the external electronic device, while the virtual environment is displayed.

According to an embodiment, the input information obtained or received in the input operation 200 may include various types of information. For example, the input information may include text information 201, video information 202, and voice information 203. For example, the text information 201 may represent information in the form of text that may be displayed through a user or a server. Further, the video information 202 may represent information in the form of an image including information on movement of a lip of a user or a visual object corresponding to the user. Further, the voice information 203 may represent information on a voice of a user or a visual object corresponding to the user.

According to an embodiment, the input information may include information inputted to the electronic device and an external electronic device, or information inputted from a server in which the electronic device and the external electronic device are connected. For example, the text information 201 may include information inputted by a user of the external electronic device through an input device of the external electronic device. The text information 201 may include information inputted from the server to the electronic device. Further, the video information 202 may include information obtained by photographing the user's face of the external electronic device through the camera of the external electronic device (e.g., the camera module 180 of FIG. 1), or information on a face part of the visual object in the virtual environment corresponding to the user of the external electronic device. Further, the video information 202 may include information inputted from the server to the electronic device. For example, the voice information 203 may include information inputted by a user of the external electronic device through an input device of the external electronic device, or information on a voice of a visual object in the virtual environment corresponding to the user of the external electronic device. The voice information 203 may include information input from the server to the electronic device.

According to an embodiment, in the processing operation 210, the processor may process the input information. For example, the processing operation 210 may include processing for identifying in a unit of word segment (or word) according to the input information. The processing operation 210 may include text information processing 211, video information processing 212, and audio information processing 213. The unit of the word segment is only defined for convenience of explanation, and embodiments of the present disclosure are not limited thereto. The word segment may indicate a minimum unit capable of identifying an inappropriate expression. For example, the word segment may include a word including a substantially inappropriate expression. For example, the word segment may indicate a part excluding a postpositional particle in a word segment (or word).

Referring to the text information processing 211, when the text information 201 is input, the processor may identify at least one word by normalizing for identifying a character part other than a symbol in the text information 201. For example, when the text information 201 includes "Hello, nice to meet you^^", the processor may identify "Hello" and "nice to meet you" which are character parts, excluding the symbols "," and "^^". The character part may represent natural language. The processor may identify at least one word by separating the natural language for each word, and may store it through a memory, a buffer, or a server for each word.

Referring to the video information processing 212, in the case of inputting the video information 202, the processor may identify at least one word, based on the movement information of the lip included in the video information 202. For example, the processor may identify the natural language from movement information of a lip of a user or a visual object of the video information 202, through lip reading. The processor may identify at least one word by separating the natural language for each word, and may store it through a memory, a buffer, or a server for each word.

Referring to the voice information processing 213, when voice information 203 is input, the processor may identify at least one word by obtaining at least one phoneme of the voice information 203. For example, the processor may identify at least one phoneme from the voice information 203 and may identify the natural language through the at least one phoneme. The processor may identify at least one word by separating the natural language for each word. Alternatively, the processor may identify at least one phoneme from the voice information 203 and may directly identify at least one word from the identified at least one phoneme. The processor may store each word through a memory, a buffer, or a server.

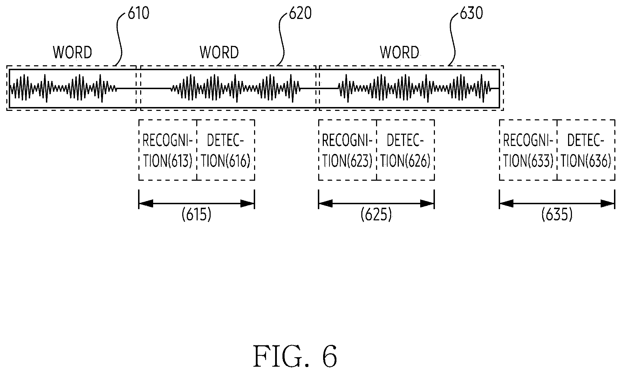

According to an embodiment, in the detection and conversion operation 220, the processor may perform a detection operation 221 for identifying an inappropriate part of the word and a conversion operation 225 for changing a part of the word. For example, the processor may perform the detection and conversion operation 220 based on the at least one word identified in the processing operation 210. Further, FIG. 2A illustrates a process of performing the detection and conversion operation 220 based on at least one word by the processor of the electronic device (e.g., a receiption device), but embodiments of the present disclosure are not limited thereto. The processor may receive information on a result of detecting an inappropriate part for at least one word by the processor or server of the external electronic device (e.g., a transmitting device), and may perform an operation of converting an expression based on the information. Specific content related thereto will be described in FIG. 6 below.

According to an embodiment, in the detection operation 221, the processor may identify an inappropriate portion of the at least one word identified in the processing operation 210. For example, the processor may obtain at least one word "Fuxx" 222 by processing the text information 201. For example, the processor may identify "PEK" 223 through a movement of the lip by processing the video information 202, and identify at least one word "Fuxx" based on it. The processor may identify the phoneme "FEOK" 224 by processing the voice information 203 and identify at least one word "Fuxx" based on it. In the above example, the processor identifies one word "Fuxx", but the present disclosure is not limited thereto and may identify at least one word including "Fuxx". The processor may identify an inappropriate portion included in the at least one identified word. For example, the processor may identify an inappropriate portion by identifying whether a value of at least one word corresponds to a reference value. For example, by identifying that "Fuxx" corresponds to a reference value, the processor may identify that a part of the at least one word is an inappropriate portion. The reference value may include values corresponding to an expression (e.g., profanity, swearing words, sexually degrading expressions) that is not allowed in the virtual environment and values corresponding to an expression predetermined by the user.

According to an embodiment, in the conversion operation 225, the processor may change a value represented by a part of a word. For example, the processor may identify that the value represented by the identified word "Fuxx" 226 corresponds to the reference value. Accordingly, the processor may change the value of "F" 227 of "Fuxx" 226 to the value of "B" 229" and change "Fuxx" 226 to "Buck" 228. In such a case, changing the value of "F" 227" to the value of "B" 229 may be changed based on an algorithm or a statistical model (e.g., a decision tree or a deep learning model) preset in the processor.

According to an embodiment, in the generation operation 230, the processor may generate an animation of the visual object based on the at least one word changed in the conversion operation 225. The processor may generate an animation representing that the at least one word is uttered. For example, the processor may generate an animation representing that at least one word including "Buck" 228 is uttered.

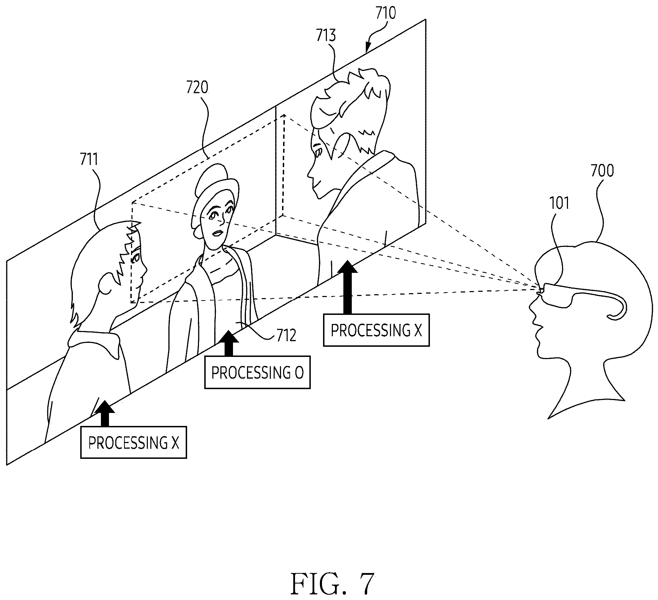

According to an embodiment, the processor may identify a part of an area displayed through the display of the electronic device in order to identify the visual object to which the animation is applied. Accordingly, the processor may apply the animation to the visual object within the identified area, and display the visual object to which the animation is applied, via the display. A specific example related thereto will be described in FIG. 7.

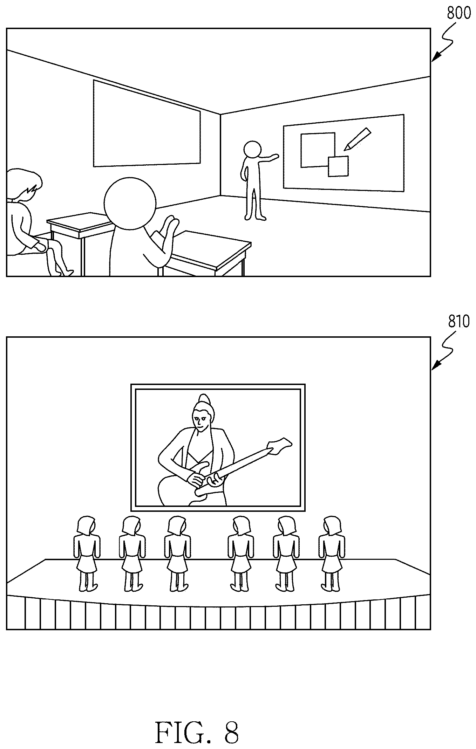

According to an embodiment, the processor may identify an animation of the visual object based on various parameters. For example, the processor may identify a change level of the animation of the visual object based on a place parameter. In the case of a specific place, the processor may change an animation to be applied to the visual object to a high level and express the same, but in the case of a place different from the specific place, an animation to be applied to the visual object may be changed to a low level or expressed without any change. A specific example related thereto will be described with reference to FIG. 8.

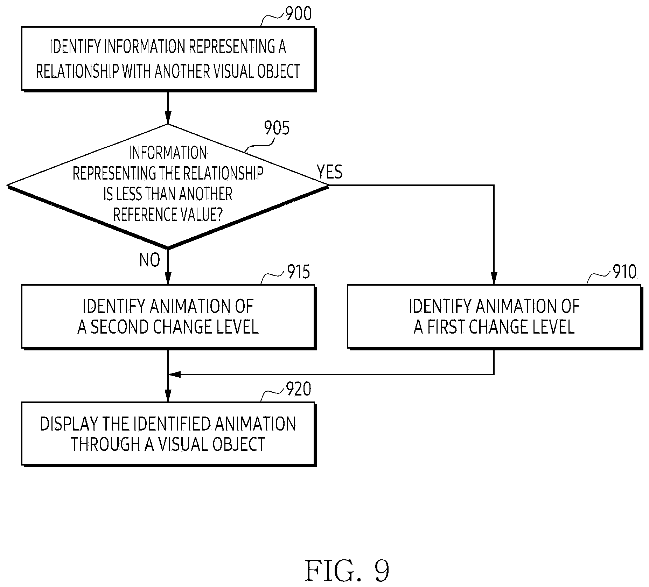

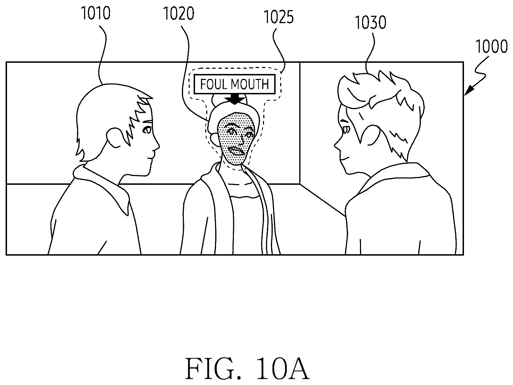

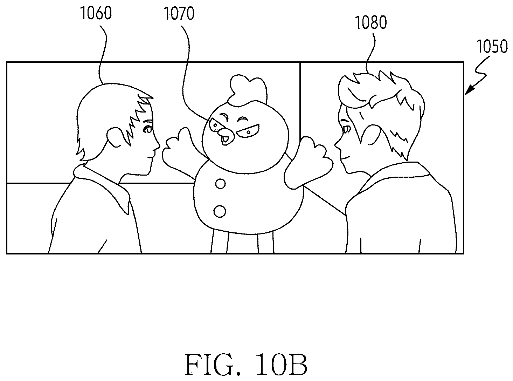

Further, the processor may identify whether the animation is applied and the level of change, based on at least one of a parameter representing a role between visual objects in the virtual environment, a parameter representing an age of the user of the external electronic device, a parameter representing a relationship between the user of the electronic device and the user of the external electronic device, or a parameter for a reputation of the visual object in the virtual environment. Details related thereto will be described with reference to FIGS. 9, 10A, and 10B below.

According to an embodiment, referring to the output operation 240, the processor may output a visual object based on the animation obtained in the generation operation 230. For example, the processor may display an animation of the visual object through a display. The processor may output a visual object 241 based on an animation expressing uttering at least one word including the "Buck" 228 generated in the generation operation 230. The animation 242 of a mouth part of the visual object 241 may express uttering at least one word including the "Buck" 228.

According to an embodiment, the processor may output a voice at the same time of outputting the visual object 241. For example, the processor may output a voice for a word (e.g., at least one word including "Fuxx" 226) before the visual object 241 is changed in the conversion operation 225, or a voice for a word after the change (e.g., at least one word including "Buck" 228), together with the visual object 241. In other words, the processor may output the voice with or without changing the voice. However, embodiments of the present disclosure are not limited thereto, and the processor may output only the visual object 241.

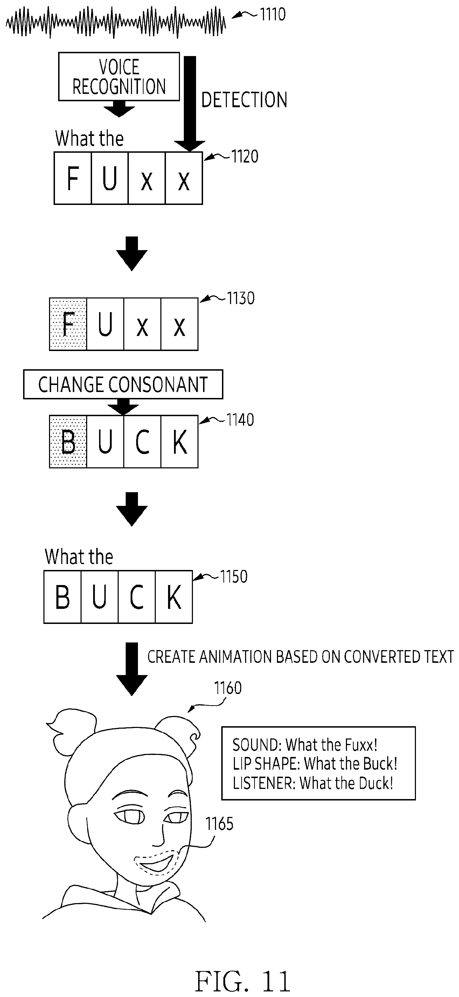

Even when the processor outputs a voice for the word before changing, in the case of outputting together the visual object 241 to which the animation 242 is applied to the word after the change, the user may identify as uttering of a word different from the word before the changing and the word after the changing. This is based on the McGurk effect, and its details will be described in detail with reference to FIG. 11. In contrast, when the processor identifies that the user of the electronic device is not looking at the virtual environment, the processor may output a voice for the word after the change. For example, the processor may perform eye-tracking on the user of the electronic device through a sensor, and thus may identify that the user of the electronic device is not looking at the virtual environment. The processor may output a voice for the word after the change in order to prevent an inappropriate expression from being output.

A general metaverse service may not restrict a user from using an avatar (or a visual object). Accordingly, the user may display inappropriate expressions through the avatar in the virtual environment, such as sexually humiliating or degrading behavior or language that makes other users feel uncomfortable. Other users may not use the metaverse service due to the user's inappropriate expression. An device and method according to an embodiment of the present disclosure may change an animation of the visual object or change an output voice in representing the visual object in the virtual environment. Accordingly, the device and method according to an embodiment of the present disclosure may reduce discomfort factors in the metaverse service provided through the virtual environment and provide an optimized user experience. Furthermore, the device and method according to an embodiment of the present disclosure may increase the user's immersion in the metaverse service provided through the virtual environment.

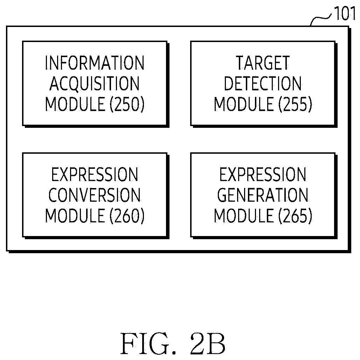

FIG. 2B illustrates an example of functional components of an electronic device for representing a visual object in a virtual environment, according to an embodiment of the disclosure.

The virtual environment may represent a virtual space of a metaverse service provided through an electronic device (e.g., the electronic device 101 of FIG. 1). The visual object may represent an avatar in the virtual environment corresponding to the user. The user may include a user of an external electronic device different from the electronic device. Hereinafter, the electronic device 101 of FIG. 2B may be understood substantially the same as the electronic device 101 of FIG. 1. For example, components included in the electronic device 101 of FIG. 2B may be controlled by the processor (e.g., the processor 120 of FIG. 1).

FIG. 2B illustrates examples of functional components for representing a visual object in a virtual environment included in the electronic device 101. According to an embodiment, the electronic device 101 may include an information acquisition module 250, a target detection module 255, an expression conversion module 260, and an expression generation module 265. However, the present disclosure is not limited thereto, and the expression conversion module 260 and the expression generation module 265 may be implemented as one functional component. In other words, the functional components of FIG. 2B are only of an example, and the electronic device 101 may include a module capable of performing substantially the same function.

According to an embodiment, the information acquisition module 250 may obtain information from a user of an external electronic device different from the electronic device 101, and a server related to the virtual environment in which the electronic device 101 and the external electronic device are connected. The information may be referred to as input information. The input information may be obtained for a visual object corresponding to the user of the external electronic device in relation to the virtual environment.

According to an embodiment, the information acquisition module 250 may perform processing according to the type of input information acquired. For example, the information acquisition module 250 may perform normalization on text information, identify movement information of a lip for video information, and identify at least one phoneme for voice information. Accordingly, the information acquisition module 250 may identify at least one word segment (word) by performing the above processing. The unit of the word is only defined for convenience of explanation, and embodiments of the present disclosure are not limited thereto. The word segment may represent a minimum unit capable of identifying an inappropriate expression. For example, the word segment may include a word including a substantially inappropriate expression. For example, the word segment may indicate a part excluding a postpositional particle within a word segment (word). The at least one word may include natural language. For example, the natural language may include Korean, English, and the like. The processing may represent natural language processing.

According to an embodiment, the information acquisition module 250 may separate the at least one word for each word and store the same in a memory, a buffer, or a server. The at least one word may be used to identify whether an inappropriate expression is included, based on a reference value corresponding to an inappropriate expression.

According to an embodiment, the information acquisition module 250 may identify information on at least one word processed from an external electronic device (e.g., at least one word and a detection result for an inappropriate expression of the at least one word). For example, the processor may obtain information on the at least one word from an external electronic device (e.g., the external electronic device connected to the virtual environment) through a communication circuit, and identify information on the at least one word through the information acquisition module 250.

According to an embodiment, the target detection module 255 may identify an inappropriate expression of the identified at least one word. For example, the target detection module 255 may identify a portion of the at least one word corresponding to a reference value, using the reference value corresponding to the inappropriate expression. The target detection module 255 may identify a portion of the at least one word corresponding to the reference value corresponding to an inappropriate expression "Fuxx" (e.g., a combination of a mechanical word value respectively indicating "F", "U", "C", "K", and a value indicating an array of the mechanical word values. The at least one word may include one word or a plurality of words (e.g., a sentence). For example, the inappropriate expression may include abusive language, profanity, sexually offensive language, or expressions corresponding to a preset value by the user.

According to an embodiment, the expression conversion module 260 may change a value for a portion of the at least one word identified based on the reference value. The portion may be one word and may include a character (e.g., a consonant or a vowel) within one word. The expression conversion module 260 may change "F" to "B" for the identified part "Fuxx". Accordingly, the expression conversion module 260 may identify "Buck", which is at least one word based on the changed value. The changed value may be a value preset in relation to the virtual environment or set by the user of the electronic device. When the value represented by the portion is a consonant, the changed value may also be a consonant. Alternatively, when the value represented by the portion is a vowel, the changed value may also be a vowel. Accordingly, at least one word based on the changed value may be changed into an expression that does not offend the user of the electronic device.

According to an embodiment, with respect to a portion of the at least one word identified based on the reference value, the expression conversion module 260 may delete a corresponding value or change the corresponding value to an unrelated value rather than changing it to another related value as described above. For example, the expression conversion module 260 may delete a value represented by a portion of the at least one word identified based on the reference value, in order not to provide mouth shape expression or voice information through the visual object. Alternatively, the expression conversion module 260 may change a value represented by a portion of the at least one word identified based on the reference value to an unrelated value, in order to change the mouth shape expression or voice information through the visual object into an unrelated expression. Changing to the unrelated value may indicate changing the visual object corresponding to the user of the external electronic device into an animal-shaped visual object in the example of FIG. 10B below.

According to an embodiment, the expression generation module 265 may generate an animation for a visual object, based on at least one word based on the changed value. For example, the expression generation module 265 may generate an animation representing that the at least one word based on the changed value is uttered with respect to the visual object. However, the present disclosure is not limited thereto, and an animation representing the behavior of the visual object at the same time of indicating that the at least one word is uttered may be generated. According to an embodiment, the generated animation may be stored in a memory or a server through a biovision hierarchy animation (BVH) file.

According to an embodiment, the expression generation module 265 may identify a visual object to which the animation is applied, based on various parameters. For example, the parameters may include at least one of a place parameter of the virtual environment, a parameter indicating a role between visual objects in the virtual environment, a parameter indicating the age of the user of the external electronic device, a parameter representing a relationship between the user of the electronic device and the user of the external electronic device, or a parameter for the reputation of a visual object in the virtual environment. Further, although not shown in FIG. 2B, the electronic device 101 may display a visual object based on an animation generated by the expression generation module 265 on a display. For example, the electronic device 101 may display the visual object through the display, based on a 2D animation converted by a 3D renderer through the expression generation module 265.

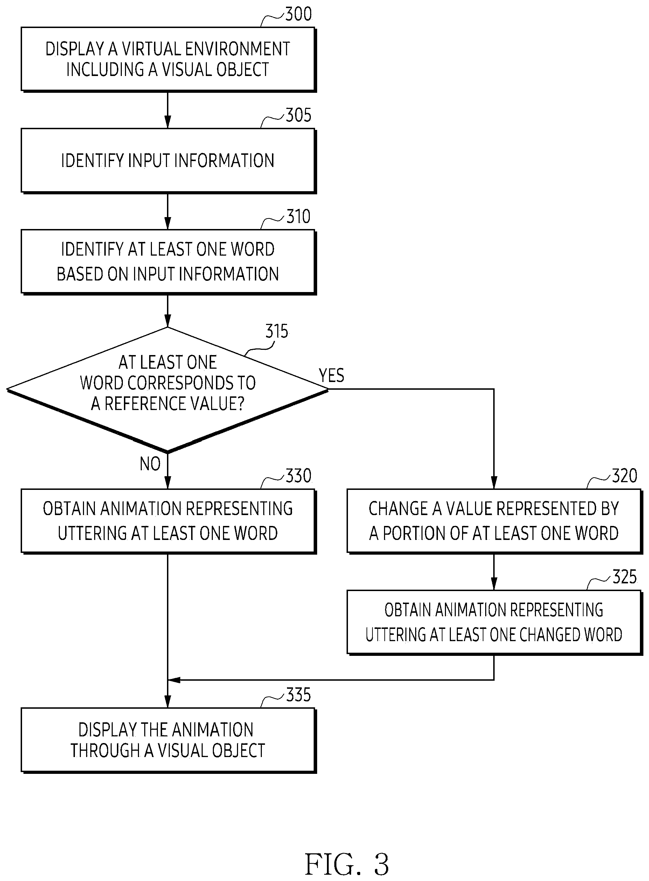

FIG. 3 is a flowchart illustrating an example of a method for representing a visual object in a virtual environment according to an embodiment of the disclosure.

The virtual environment may represent a virtual space of a metaverse service provided through the electronic device (e.g., the electronic device 101 of FIG. 1). The visual object may represent an avatar in the virtual environment corresponding to the user. The user may include a user of an external electronic device different from the electronic device. Hereinafter, the method of FIG. 3 may be performed by the electronic device 101 of FIG. 2B. The electronic device 101 of FIG. 2B may be understood substantially the same as the electronic device 101 of FIG. 1. For example, the method of FIG. 3 may be performed by the processor of the electronic device (e.g., the processor 120 of FIG. 1).

Referring to FIG. 3, in operation 300, the processor may display a virtual environment including a visual object. For example, the processor may display the virtual environment on a display (e.g., the display module 160 of FIG. 1), using a software application that displays the virtual environment. Although not shown in FIG. 3, the processor may execute the software application prior to the operation 300. The visual object may refer to an avatar corresponding to the user of the external electronic device. Hereinafter, FIG. 3 illustrates the virtual environment including one visual object as an example, but an embodiment of the present disclosure is not limited thereto. The virtual environment may include at least one visual object. The at least one visual object may correspond to each user of at least one external electronic device.

In operation 305, the processor may identify input information. For example, the processor may obtain the input information from a user of the electronic device and an external electronic device, or a server related to the virtual environment. The input information may be obtained with respect to a visual object corresponding to the user of the external electronic device in relation to the virtual environment. Information on the virtual environment may be obtained from the server. The processor may display the virtual environment, based on the information on the virtual environment.

According to an embodiment, the input information may include various types of information. For example, the input information may include text information, video information, and voice information. For example, the text information may indicate information in the form of text that may be displayed through a user or a server. Further, the video information may indicate information in the form of an image, including information on movement of a lip of a user or a visual object corresponding to the user. Further, the voice information may indicate information on a user or a voice of a visual object corresponding to the user.

According to an embodiment, the input information may include information inputted to the external electronic device or information inputted from a server which the electronic device and the external electronic device are connected to. For example, the text information may include information inputted by a user of the external electronic device through an input device of the external electronic device. The text information may include information inputted from the server to the electronic device. Further, the video information may include information obtained by photographing a face of the user of the external electronic device through a camera of the external electronic device, or information on a face part of the visual object in the virtual environment corresponding to the user of the external electronic device. Further, the video information may include information inputted from the server to the electronic device. For example, the voice information may include information inputted by a user of the external electronic device through an input device of the external electronic device, or information on a voice of a visual object in the virtual environment corresponding to the user of the external electronic device. The voice information may include information inputted from the server to the electronic device.

In operation 310, the processor may identify at least one word based on input information. The unit of the word is only defined for convenience of explanation, and embodiments of the present disclosure are not limited thereto. The word may represent a minimum unit capable of identifying an inappropriate expression. For example, the word may include a word including a substantially inappropriate expression. The word may indicate a portion excluding a postpositional particle in the word. For example, the processor may identify at least one word by processing the input information to extract natural language. The natural language may include Korean, English or the like as a meaning opposite to the machine language. Although not shown in FIG. 3, according to an embodiment, the processor may store at least one identified word in a memory or a buffer.

In operation 315, the processor may identify whether a portion of at least one word corresponds to a reference value. For example, the processor may identify whether a portion of the at least one stored word corresponds to a reference value. For example, the portion may include a first word included in the at least one word. The reference value may include a value corresponding to an expression (e.g., an expression that causes swear words, profanity, and sexual shame) that may not be allowed in the virtual environment and a value corresponding to an expression determined in advance by the user. In FIG. 3, a portion of at least one word is described as an example, but the present disclosure is not limited thereto. For example, the whole of at least one word may correspond to the reference value. As described above, the processor may detect such an inappropriate expression by identifying whether a portion of at least one word corresponds to the reference value, based on at least one of the following methods.

For example, the processor may identify that at least one word corresponds to the reference value, by identifying the user's intention included in the input information. Inappropriate intention of the user may indicate that the input information does not include inappropriate expressions such as direct swearing or profanity, but includes inappropriate language when interpreting the meaning of the input information. For example, when at least one word identified is "out of a normal mental state," the at least one word may be an inappropriate expression for criticizing the other person. Further, when at least one word identified is, for example, "dark, too dark to see," the at least one word may be an inappropriate expression for racial discrimination. Further, when at least one word identified is "Take off your clothes," for example, the at least one word may be an inappropriate expression for sexual harassment. In order to identify an intention to express such an inappropriate expression as described above, the processor may use artificial intelligence to identify that the at least one word is a reference value representing an inappropriate expression. For example, based on the stored data on at least one word, the processor may identify that the intention of the at least one word is a reference value representing an inappropriate expression using deep learning. The deep learning may include text classification.

Further, using a phonological method, the processor may identify that at least one word corresponds to a reference value. The phonological method is a method of identifying by converting at least one word into phonological units, in order to identify at least one word that represents substantially the same meaning by adding another letter in an inappropriate expression or changing its consonant or vowel. For example, when at least one word is "feock", its phonological unit may be defined as /f/, /∧/, and /k/. This may correspond to /f/, /∧/, /k/ which is a phonological unit of "fuxx" set as an inappropriate expression. Therefore, the processor may identify that at least one word corresponds to a value indicating "fuxx", even if it is a value indicating "feock". Further, for example, when at least one word is "fucc", its phonological unit may be defined as /f/, /∧/, /k/. This may correspond to /f/, /∧/, /k/ which is a phonological unit of "fuxx" set as an inappropriate expression. Therefore, the processor may identify that even if at least one word is a value representing "fucc", it corresponds to a value representing "fuxx". Further, for example, when at least one word is " 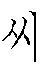 2 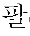 (C2pal)", its phonological units may be defined as " 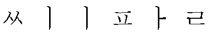 ". The processor may identify that the at least one word separated by its phonological units is similar to a reference value (" 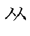 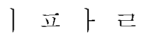 " ) of " 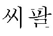 (Cipal)" , which is an inappropriate expression.

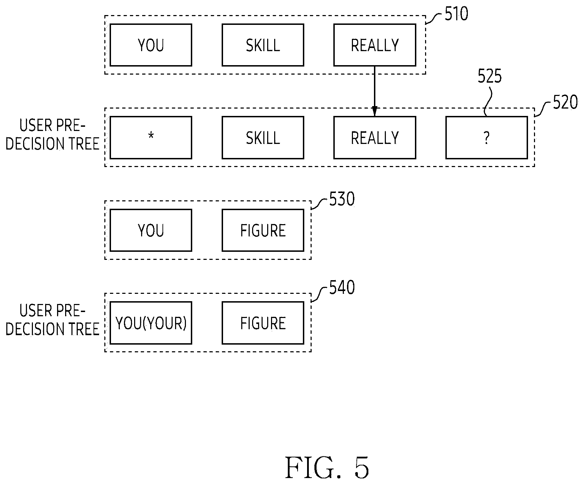

Further, the processor may identify whether or not at least one word corresponds to a reference value (e.g., a value predetermined by the user) based on a decision tree. The decision tree may represent an algorithm for identifying whether or not at least one word identified based on a user's predetermined value and input information corresponds. For example, the value determined in advance by the user may correspond to an expression not desired by the user. For example, based on the decision tree, the processor may predict a word to be displayed next to at least one word stored so far, or may identify that the intention is inappropriate. The decision tree may represent an algorithm using N-Gram. The N-Gram may be included in a statistical language model (SLM). Specific details related thereto will be described with reference to FIG. 5 below.

Further, the processor may differently perform an operation of identifying whether or not at least one word corresponds to the reference value, according to an inappropriate expression corresponding to the reference value. For example, when the reference value is a value determined in advance by the user corresponding to an expression not desired by the user, the processor may identify whether or not it corresponds to the reference value based on the at least one word identified by the electronic device. Since the value determined in advance by the user may vary for each user of the electronic device and may include the user's personal information, the electronic device may directly perform an operation of confirming whether or not it is identified. In contrast, when the reference value is a value corresponding to a swear language or profanity, or an inappropriate intention of a sentence (i.e., a sentence structure containing at least one word), the processor may receive a result including information identifying whether or not at least one word identified by the external electronic device and at least one word identified by the external electronic device correspond to the reference value. The processor may identify whether the reference value corresponds to at least one word, based on the received result. In consideration of the relatively objective nature of the content in a case of swear words, profanity, or inappropriate intent of the sentence, and in consideration of availability of the latency for transmitting data, the external electronic device (e.g., a transmitting device) may perform an operation to confirm whether the identification is performed and transmit a result of the performed operation to the electronic device (e.g., a receiving device). The electronic device may identify that information input to the external electronic device is an inappropriate expression, based on the received result. Specific detail related thereto will be described with reference to FIG. 6.

In operation 315, when the processor identifies that the at least one word corresponds to the reference value, operation 320 may be performed. In contrast, in operation 315, when the processor identifies that the at least one word does not correspond to the reference value, operation 330 may be performed.

In operation 320, the processor may change a value represented by a portion of at least one word. When the portion of at least one word corresponds to a reference value, the processor may change a value of the portion corresponding to the reference value to another value. For example, the processor may change a value of a first word of the at least one word to a value representing a second word. For example, when the at least one word is "what the fuxx", the processor may change "fuxx" which is a word corresponding to the reference value to "buck". Accordingly, the processor may identify "what the buck". The second word may represent a word in which a consonant or vowel is changed from the first word.

In operation 325, the processor may obtain an animation expressing that at least one changed word is uttered. The processor may obtain an animation representing that "what the buck" identified in the operation 320 is uttered.

According to an embodiment, the processor may identify a portion of an area displayed through the display of the electronic device in order to identify a visual object to which the animation is applied. Accordingly, the processor may apply the animation to the visual object in the identified area, and display the visual object to which the animation is applied through the display. A specific example related thereto will be described with reference to FIG. 7.

According to an embodiment, the processor may identify the animation of the visual object based on various parameters. For example, the processor may identify the animation of the visual object based on the place parameter. The processor may identify whether the animation of the visual object is applied and the level of change, according to the place. A specific example related thereto will be described in FIG. 8. Further, the processor may identify whether to apply the animation and a level of change, based on at least one of a parameter representing a role between visual objects in the virtual environment, a parameter representing an age of a user of the visual object (e.g., a user of the external electronic device) or a setting age of the visual object (e.g., a visual object corresponding to a user of the external electronic device), a parameter representing a relationship between a user of the electronic device and a user of the external electronic device, or a parameter for a reputation of a visual object in the virtual environment. Specific detail related to this will be described with reference to FIGS. 9, 10A, and 10B below.

In operation 330, the processor may obtain an animation expressing that at least one word is uttered. For example, the processor may identify that the at least one word does not contain an inappropriate expression, as the processor identifies that a portion of the at least one word does not correspond to the reference value. Accordingly, the processor may obtain the animation expressing that the at least one word is uttered.

In operation 335, the processor may display an animation through a visual object. The processor may display, through the visual object, an animation representing utterance of at least one word changed in the operation 325 or an animation representing utterance of at least one word not changed in the operation 335. The visual object may represent an object in the virtual environment corresponding to a user of the external electronic device of the electronic device.

According to an embodiment, the processor may output an animation of a visual object and a voice at the same time. For example, the processor may output a voice for a word (e.g., "what the Fuxx") before the visual object is changed in operation 325 or a voice for a word (e.g., "what the buck") after the change, together with the visual object. In other words, the processor may output the voice with or without changing the voice. However, embodiments of the present disclosure are not limited thereto, and the processor may output only the visual object.

Even if the processor outputs a voice for a word before the change, when it outputs a visual object to which an animation is applied for the word after the change together, the user of the electronic device may identify it as utterance of a word different from the word before the change and after the change. This is based on the McGurk effect, and its details will be described with reference to FIG. 11. In contrast, when the processor identifies that the user of the electronic device is not looking at the virtual environment, the processor may output the voice for the word after the change. For example, the processor may perform eye-tracking on the user of the electronic device through a sensor, and thus may identify that the user of the electronic device is not looking at the virtual environment. The processor may output the voice for the word after the change in order to prevent an inappropriate expression from being output.

Referring to the above description, the device and method according to an embodiment of the present disclosure may change the animation of the visual object or change the output voice in representing the visual object in the virtual environment. Accordingly, the device and method according to an embodiment of the present disclosure can reduce discomfort factors in the metaverse service provided through the virtual environment and provide an optimized user experience. Further, the device and method according to an embodiment of the present disclosure can increase the user's immersion in the metaverse service provided through the virtual environment.

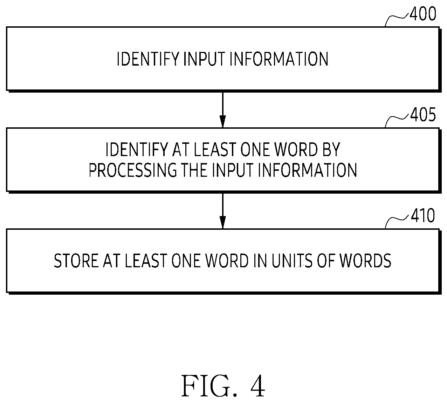

FIG. 4 is a flowchart illustrating an example of a method for processing input information according to an embodiment of the disclosure.

The virtual environment may represent a virtual space of a metaverse service provided through an electronic device (e.g., the electronic device 101 of FIG. 1). The visual object may represent an avatar in the virtual environment corresponding to the user. The user may include a user of an external electronic device different from the electronic device. Hereinafter, the method of FIG. 4 may be performed by the electronic device 101 of FIG. 2B. The electronic device 101 of FIG. 2B may be understood substantially the same as the electronic device 101 of FIG. 1. For example, the method of FIG. 4 may be performed by the processor of the electronic device (e.g., the processor 120 of FIG. 1).

FIG. 4 illustrates examples of detailed operations of the operation 305 and the operation 310 of FIG. 3. Accordingly, operations other than operation 400 to operation 410 of FIG. 4 may be understood substantially the same as operation of FIG. 3.

Referring to FIG. 4, in operation 400, the processor may identify input information. For example, the processor may identify the input information from a user of the electronic device and an external electronic device, or a server related to the virtual environment. The input information may be obtained with respect to a visual object corresponding to the user of the external electronic device in relation to the virtual environment.

According to an embodiment, the input information may include various types of information. For example, the input information may include text information, video information, and voice information. For example, the text information may indicate information in the form of text that can be displayed through a user or a server. Further, the video information may indicate information in the form of an image, including information on movement of a lip of a user or a visual object corresponding to the user. Further, the voice information may indicate information on a voice of a user or a visual object corresponding to the user.

According to an embodiment, the input information may include information inputted to an external electronic device different from the electronic device or information inputted from a server in which the electronic device and the external electronic device are connected. For example, the text information may include information inputted by a user of the external electronic device through an input device of the external electronic device. The text information may include information inputted from the server to the electronic device. Further, the video information may include information obtained by photographing the user's face of the external electronic device through the camera of the external electronic device, or information on a face part of the visual object in the virtual environment corresponding to the user of the external electronic device. Further, the video information may include information inputted from the server to the electronic device. For example, the voice information may include information inputted by a user of the external electronic device through an input device of the external electronic device, or information on a voice of the visual object in the virtual environment corresponding to the user of the external electronic device. The voice information may include information inputted from the server to the electronic device.

In operation 405, the processor may identify at least one word by processing the input information. For example, the processor may identify at least one word by processing the input information to extract natural language. The natural language may include Korean or English in a meaning opposite to that of a machine language.

For example, the processing may include text information processing. When the text information is input, the processor may identify at least one word by normalizing for identifying a character part other than a symbol in the text information. For example, when the text information includes "Hello, :)", the processor may identify 'Hello', which is a character part, excluding the symbols ',', ':', and ')'. The character part may represent a natural language. The processor may identify at least one word by separating the natural language for each word.

Further, the processing may include video information processing. When the video information is input, the processor may identify at least one word based on motion information of a lip included in the video information. For example, the processor may identify the natural language through lip reading from the motion information of the lip of a user of video information or a visual object corresponding to the user. The processor may identify at least one word by separating the natural language for each word.

Further, the processing may include voice information processing. When the voice information is input, the processor may identify at least one word by obtaining at least one phoneme of the voice information. For example, the processor may identify at least one phoneme from the voice information and may identify natural language through the at least one phoneme. The phoneme may represent an abstract minimum unit for distinguishing a meaning of a word in at least one word of voice information uttered by a user or a visual object corresponding to the user. The processor may identify at least one word by separating the natural language for each word.

In operation 410, the processor may store at least one word in units of words. For example, the processor may store at least one word identified through the above process through a memory or a buffer for each word. The at least one stored word may be used to identify whether an inappropriate expression is included, based on identifying whether the at least one word corresponds to a reference value.

FIG. 5 illustrates an example of a method for predicting input information including a plurality of words according to an embodiment of the present disclosure.

The method of FIG. 5 may be performed by the electronic device 101 of FIG. 2B. The electronic device 101 of FIG. 2B may be understood substantially the same as the electronic device 101 of FIG. 1. For example, the method of FIG. 5 may be performed by the processor of the electronic device (e.g., the processor 120 of FIG. 1).

FIG. 5 illustrates a specific example of a decision tree among methods of identifying whether at least one word includes an inappropriate expression, in operation 315 of FIG. 3. The decision tree may indicate an algorithm for identifying whether at least one word identified based on input information corresponds to a value determined in advance by a user of the electronic device. For example, a predetermined value by the user may correspond to an expression not desired by the user of the electronic device. Based on the decision tree, the processor may predict a word to be displayed next to at least one word stored so far or identify that its intention is inappropriate. For example, the decision tree may indicate an algorithm using N-Gram. The N-Gram may be included in a statistical language model (SLM).

Referring to FIG. 5, the processor may identify a first set of words 510 based on input information. The first set of words 510 may represent input information representing a plurality of words other than a single word. The intention of a sentence may be determined based on a relationship between a plurality of words, and thus the first set of words 510 may be identified from the input information representing a plurality of words. For example, the first set of words 510 may include "idiot (intending you)", "skill", and "really". According to an embodiment, the processor may identify whether the predetermined value 520 by the user of the electronic device corresponds to the first set of words 510. For example, the predetermined value 520 by the user may include "*", "skill", and "really". The character "*" may represent any word. In the above-described example, the processor may identify that the first set of words 510 and the predetermined value 520 substantially correspond to each other. Accordingly, the processor may identify that the first set of words 510 includes an inappropriate expression, or that the word 525 following the first set of words 510 might be an inappropriate expression. Accordingly, the processor may set the first set of words 510 as a target for changing the expression.

Referring to FIG. 5, the processor may identify a second set of words 530 based on input information. The second set of words 530 may represent input information representing a plurality of words instead of a single word. The intention of a sentence may be determined based on a relationship between a plurality of words, and thus the second set of words 530 may be identified from input information representing a plurality of words. For example, the second set of words 530 may include "idiot (intending you)" and "figure". According to an embodiment, the processor may identify whether the predetermined value 540 by the user corresponds to the second set of words 530. For example, the predetermined value 540 by the user of the electronic device may include "idiot/idiots (intending you/your)" and "figure". In the above-described example, the processor may identify that the second set of words 530 substantially corresponds to the predetermined value 540. Accordingly, the processor may identify that the second set of words 530 includes an inappropriate expression, or that the word following the second set of words 530 might be an inappropriate expression. Accordingly, the processor may set the second set of words 530 as a target for changing the expression.

FIG. 6 illustrates an example of identifying whether a word corresponds to a reference value according to an embodiment of the disclosure.

FIG. 6 illustrates an example of a method of identifying an inappropriate expression based on information identified by an external electronic device among methods of identifying whether at least one word includes an inappropriate expression, in operation 315 of FIG. 3. The external electronic device may be referred to as a transmitting device, and the electronic device may be referred to as a receiving device. However, an embodiment of the present disclosure is not limited to including only the method of the electronic device, which is a receiving device. For example, the method of the external electronic device, which is a transmitting device, may be included in the embodiment of the present disclosure. For example, the transmitting device or the receiving device may be understood substantially the same as the electronic device 101 of FIG. 2B. The electronic device 101 of FIG. 2B may be understood substantially the same as the electronic device 101 of FIG. 1. For example, the method of FIG. 6 may be performed by the processor of the electronic device (e.g., the processor 120 of FIG. 1).

Referring to FIG. 6, the processor may identify at least one word. For example, the processor may identify a first word 610, a second word 620, and a third word 630 based on the input information. The processor may sequentially identify the first word 610, the second word 620 and the third word 630 in the order of input time.

According to an embodiment, after input of the input information related to the first word 610 is completed, the input of the input information related to the second word 620 is started and the same time, the processor may identify whether an inappropriate expression of the first word 610 is included in a first section 615. For example, the processor may identify the first word 610 based on the input information related to the first word 610 in a first partial section 613 of the first section 615. The processor may identify whether at least a portion of the first word 610 in a second partial section 616 of the first section 615 corresponds to a reference value representing an inappropriate expression.

Further, after the input of the input information related to the second word 620 is completed, the input of the input information related to a third word 630 is started and the same time, the processor may identify whether an inappropriate expression of the second word 620 is included in a second section 625. For example, the processor may identify the second word 620 based on the input information related to the second word 620 in a first partial section 623 of the second section 625. The processor may identify whether at least a portion of the second word 620 in a second partial section 626 of the second section 625 corresponds to a reference value representing an inappropriate expression.

Further, after the input of the input information related to the third word 630 is completed, the input of the input information related to other word after the third word 630 is started and the same time, the processor may identify whether or not an inappropriate expression of the third word 630 is included in a third section 635. For example, the processor may identify the third word 630 based on the input information related to the third word 630 in the first partial section 633 of the third section 635. The processor may identify whether at least a portion of the third word 630 in the second partial section 636 of the third section 635 corresponds to a reference value representing an inappropriate expression.

According to an embodiment, the processor may transmit information on each word and information on the result of identification to a receiving device. For example, after the second partial section 616, the processor may transmit a result identified in the second partial section 616 (e.g., the first word 610 and information indicating that the first word 610 includes an inappropriate expression) to the receiving device. Further, after the second partial section 626, the processor may transmit a result identified in the second partial section 626 (e.g., the second word 620 and information indicating that the second word 620 includes an inappropriate expression) to the receiving device. Further, after the second partial section 636, the processor may transmit a result identified in the second partial section 636 (e.g., the third word 630 and information indicating that the third word 630 includes an inappropriate expression) to the receiving device.

Referring to the above description, the processor may identify whether the word includes an inappropriate expression, using a latency of recognizing input information related to the word and a latency of transmitting the input information from the transmitting device to the receiving device. Since displaying of the animation for the word is performed by the receiving device, the reference value may include an inappropriate expression corresponding to a relatively objective value. For example, the reference value of FIG. 6 may be a value corresponding to an inappropriate expression according to an abusive language, an expletive, or an intention of a sentence. The latencies may be times available only to the transmitting device which is a device to which information is input. Accordingly, the processor may identify the word based on information related to the word, using the latencies, and identify whether the word includes an inappropriate expression. The processor may transmit the identified result to the receiving device. The receiving device may identify a word (e.g., a first word 610 to a third word 630) according to the input information input to the transmitting device, and whether the word includes an inappropriate expression, based on the identified result.

Referring to the above description, the device and method according to an embodiment of the present disclosure may efficiently identify inappropriate expressions using a latency for information transmitted from the transmitting device to the receiving device. In expressing a visual object in a virtual environment, the device and method according to an embodiment of the present disclosure may change an animation of the visual object or change the output voice, based on the result of the identification. Accordingly, the device and method according to an embodiment of the present disclosure may reduce discomfort factors in the metaverse service provided through the virtual environment and provide an optimized user experience. Further, the device and method according to an embodiment of the present disclosure may increase the user's immersion in the metaverse service provided through the virtual environment.

FIG. 7 illustrates an example of identifying an area of a visual object to change animation in a virtual environment according to an embodiment of the disclosure.

The virtual environment may represent a virtual space of a metaverse service provided through an electronic device (e.g., the electronic device 101 of FIG. 1). The visual object may represent an avatar in the virtual environment corresponding to the user. The user may include a user of an external electronic device different from the electronic device. Hereinafter, the method of FIG. 7 may be performed through an electronic device (e.g., the electronic device 101 of FIG. 1). For example, the method of FIG. 7 may be performed by the processor of the electronic device (e.g., the processor 120 of FIG. 1).

FIG. 7 illustrates an example of a method of identifying a visual object to which an animation obtained based on at least one word including an inappropriate expression may be applied. At least one word including the inappropriate expression may indicate that at least a portion of the at least one word corresponds to a reference value.

Referring to FIG. 7, a user 700 may wear the electronic device 101. For example, the electronic device 101 may be a wearable device in the form of eyeglasses. The electronic device 101 of FIG. 7 may be understood substantially the same as the electronic device 101 of FIG. 1. FIG. 7 illustrates the electronic device 101 as a wearable device, but embodiments of the present disclosure are not limited thereto. Embodiments of the present disclosure may also be applied to the electronic device 101 other than the wearable device.

Referring to FIG. 7, the user 700 may be served a metaverse service through the electronic device 101. For example, the virtual environment 710 may represent a virtual space of the metaverse service provided through the electronic device 101. The virtual environment 710 may include visual objects for a plurality of users. For example, the virtual environment 710 may include a first visual object 711, a second visual object 712, and a third visual object 713.

According to an embodiment, the processor of the electronic device 101 may identify a visual object to which an animation may be applied. The processor may identify an area 720 viewed by the user 700 through the electronic device 101 and identify a visual object within the area 720. The processor may identify a second visual object 712 in the area 720. The second visual object 712 may represent a visual object to which an animation obtained based on at least one word including an inappropriate expression may be applied. For example, the processor may identify at least one word, based on input information obtained for the second visual object 712, and obtain an animation in response to a portion of the identified at least one word corresponding to the reference value. The animation may be applied to the second visual object 712. The processor may display the animation through the second visual object 712 on a display of the electronic device 101. Referring to the above description, the electronic device 101 may identify information on a direction viewed by the user 700 or information on a gaze, and accordingly, may identify the area 720 in the virtual environment 710. Further, the electronic device 101 may identify a visual object in the area 720 and apply the obtained animation to the identified visual object.

Referring to the above description, the device and method according to an embodiment of the present disclosure may convert inappropriate expressions that may be caused by another user in the area 720 viewed by the user 700. Accordingly, the device and method according to an embodiment of the present disclosure may efficiently use resources by applying animation to a portion (e.g., the second visual object 712) viewed by the user rather than applying animation to the entire virtual environment 710. The above method may be referred to as foveated rendering.

FIG. 8 illustrates an example of identifying an animation of a visual object based on information on a place in a virtual environment according to an embodiment of the disclosure.

The virtual environment may represent a virtual space of a metaverse service provided through an electronic device (e.g., the electronic device 101 of FIG. 1). The visual object may represent an avatar in the virtual environment corresponding to the user. The user may include a user of an external electronic device different from the electronic device. Hereinafter, the method of FIG. 8 may be performed through the electronic device (e.g., the electronic device 101 of FIG. 1). For example, the method of FIG. 8 may be performed by the processor of the electronic device (e.g., the processor 120 of FIG. 1).

FIG. 8 illustrates an example of a method of identifying an animation of a visual object based on information on a space. The information on the space may be one of a plurality of parameters for identifying a visual object to which an animation may be applied. The information on the space may be referred to as a place parameter.

Referring to FIG. 8, a first example 800 may represent an example of a case where a virtual environment is a classroom in which a class is in progress. A second example 810 may represent an example of a case where a virtual environment is a club in which a party is in progress. According to an embodiment, the processor may identify an animation of the visual object based on a place parameter. The place parameter may be determined differently according to the virtual environment. For example, the place parameter may indicate a value for identifying whether an animation is applied and a change level. Whether to apply may indicate whether to apply an animation of the visual object to the visual object. The change level may indicate a degree of filtering or a degree of change for the animation of the visual object.

Referring to the first example 800, when the virtual environment is a classroom, it is necessary to remove unnecessary voices or expressions of visual objects corresponding to other users, and thus the place parameter may indicate that the animation is applied and that the degree of change is relatively high. Accordingly, the processor may identify changing the animations of the visual objects in the virtual environment to a first level. In contrast, referring to the second example 810, when the virtual environment is a club, it may not be necessary to remove unnecessary voices or expressions of visual objects corresponding to other users, and thus the place parameter may indicate that the animation is not applied or that the degree of change is relatively low. Accordingly, the processor may identify to change the animations of the visual objects in the virtual environment to a second level. The first level may indicate that the degree of change is higher than the second level.

According to an embodiment, the processor may identify a place parameter through a software application displaying the virtual environment. For example, the processor may identify the place parameter based on data about the place stored in the software application.

FIG. 9 illustrates an example of identifying an animation of a visual object, based on a relationship between the visual object and another visual object according to an embodiment of the disclosure.

The another visual object may represent an avatar in a virtual environment corresponding to the user. The user may include a user of an external electronic device different from an electronic device (e.g., the electronic device 101 of FIG. 1). The visual object may represent an avatar in the virtual environment corresponding to the user of the electronic device. The virtual environment may represent a virtual space of a metaverse service provided through the electronic device. Hereinafter, the method of FIG. 9 may be performed by the electronic device 101 of FIG. 2B. The electronic device 101 of FIG. 2B may be understood substantially the same as the electronic device 101 of FIG. 1. For example, the method of FIG. 9 may be performed by the processor of the electronic device (e.g., the processor 120 of FIG. 1).

Referring to FIG. 9, in operation 900, the processor may identify information representing a relationship with another visual object. For example, the processor may obtain information representing a relationship stored in a server related to a software application displaying the virtual environment. The relationship may be an index indicating the intimacy between a user of an electronic device and a user of an external electronic device.

In operation 905, the processor may identify whether information representing the relationship is less than another reference value. For example, the other reference value may indicate a threshold level for identifying that the user of the electronic device and the user of the external electronic device are in a close relationship. For example, when the value of information representing the relationship is greater than or equal to the other reference value, the processor may identify that the user of the electronic device and the user of the external electronic device are in a friendly relationship. The friendly relationship may indicate a case where the user of the external electronic device is a friend or a family member, or already knows the user of the electronic device. Alternatively, when the value of information representing the relationship is less than the other reference value, the processor may identify that the user of the electronic device and the user of the external electronic device are in an unfriendly relationship. In operation 905, when the processor identifies that the value of information representing the relationship is less than the other reference value, operation 910 may be performed. In operation 905, when the processor identifies that the value of information representing the relationship is greater than or equal to the other reference value, operation 915 may be performed.

In operation 910, the processor may identify an animation of a first change level. The first change level may include a high level of filtering. For example, the processor may identify an animation of the first change level, in order to apply filtering at a high level to a visual object corresponding to the other user who is not intimate with the user of the electronic device.

In operation 915, the processor may identify an animation of a second change level. The second change level may include a low level of filtering. For example, the processor may identify an animation of the second change level in order to apply filtering at a low level to a visual object corresponding to the other user who is intimate with the user of the electronic device.

In operation 920, the processor may display the identified animation through a visual object. For example, the processor may apply an animation of a level identified in operation 910 or operation 915 to the visual object, and may display the visual object on a display.

In FIG. 9, users of the external electronic device are categorized as having a friendly or unfriendly relationship based on another reference value of one, but the embodiment of the present disclosure is not limited thereto. Using a plurality of other reference values, the processor may identify a degree of friendly relationship (or intimacy) with the user of the external electronic device. Further, the processor may vary whether to apply the animation and the change level, based on the information representing the relationship according to the reference value corresponding to an inappropriate expression. For example, in the case of a user of the external electronic device having a low level of intimacy, the processor may identify an animation to limit expressions that cause abusive language, profanity, and sexual shame of the user of the external electronic device. In the case of a user of the external electronic device having an intermediate level of intimacy, the processor may identify an animation to limit expressions such as abusive language, profanity, and the like of the user of the external electronic device or at a level set by the user of the electronic device, and may identify an animation to limit expressions that cause sexual shame. In the case of the user of the external electronic device having a high level of intimacy, the processor may identify an animation of a level set by the user of the electronic device for expressions that may cause swear words, profanity, and sexual shame of the user of the external electronic device. The level set by the user may include whether to apply the animation and the change level.

Referring to the above description, FIG. 9 illustrates an example of identifying by the processor whether an animation of a visual object is applied and a change level based on information representing a relationship. The processor may identify whether the animation is applied and the change level, based on at least one of a parameter indicating a role between visual objects in the virtual environment, a parameter indicating the age of the user of the external electronic device, or a parameter for the reputation of the visual object in the virtual environment.

For example, the processor may identify whether or not to apply an animation of each of the visual objects and the change level, based on a parameter representing the role between the visual objects in the virtual environment. For example, with respect to an animation of a visual object that is presenting to visual objects corresponding to the audience, the processor may identify the degree of filtering for expressions that may cause swear words, profanity, and sexual shame of the visual object presented, at a high level. Alternatively, with respect to an animation of each of the visual objects corresponding to the audience, the processor may identify the degree of filtering for expressions that cause swear words, profanity, and sexual shame of the visual object presented, at a low level. For example, the processor may identify a parameter representing the role through a software application displaying the virtual environment.

For example, the processor may identify whether to apply the animation of the visual object and the change level, based on a parameter indicating the user's age of the visual object or the setting age of the visual object. This is because when the user of the external electronic device is a minor, other users may be offended by using such an inappropriate expression. For example, when the user of the external electronic device is a minor and the visual object corresponding to the user of the external electronic device is set to be a minor, the processor may identify the degree of filtering at a high level for those expressions such as swear words, profanity, and causing sexual shame with respect to the animation of the visual object. Alternatively, even when the user of the external electronic device is a minor and the visual object corresponding to the user of the external electronic device is set to be an adult, the processor may identify the degree of filtering at a high level for those expressions that cause abusive language, profanity, and sexual shame with respect to the animation of the visual object. For example, even when the user of the external electronic device is an adult and the visual object corresponding to the user of the external electronic device is set to be an adult, the processor may identify the degree of filtering at a high level for those expressions such as abusive language, profanity, and causing sexual shame with respect to the animation of the visual object. For example, when the user of the external electronic device is an adult and the visual object corresponding to the user of the external electronic device is set to be an adult, the processor may identify the degree of filtering for those expressions such as abusive language, profanity, and causing sexual shame with respect to the animation of the visual object, at a low level (or user setting level). The processor may identify the parameter for the user's age of the external electronic device and an age set for the visual object corresponding to the user, through a software application displaying the virtual environment.

For example, the processor may identify whether to apply the animation of the visual object and the change level, based on the parameter for the reputation of the visual object in the virtual environment. This is because it is necessary to sanction the user when he or she continuously uses such abusive language, profanity, and expressions that cause sexual shame. For example, when there exist multiple records of the user of the external electronic device using such inappropriate expressions through the visual object, the processor may identify the degree of filtering, at a high level, for those expressions that cause abusive language, profanity, and sexual shame with respect to the animation of the visual object. Alternatively, when the user's reputation for the visual object of the external electronic device is good, the processor may identify the degree of filtering for expressions that cause abusive language, profanity, and sexual shame with a low level (or user setting level) with respect to the animation of the visual object. Alternatively, when information on the user's reputation of the external electronic device is not obtained (e.g., when there is no record), the processor may identify the degree of filtering, at a user setting level, for expressions that cause swear words, expletives, and sexual shame with respect to the animation of the visual object. The user setting level may represent a level set by the user of the electronic device. For example, the processor may identify the usage record of the user's visual object of the external electronic device through a software application displaying the virtual environment. Alternatively, the software application may provide information indicating that the user is a user who frequently uses such inappropriate expressions, with respect to the visual object having a poor reputation in the virtual environment. Accordingly, the processor may change the animation of the visual object based on the information. A specific example related to this will be described with reference to FIG. 10B below.

FIG. 10A illustrates an example of changing an animation of a visual object in a virtual environment according to an embodiment of the disclosure. FIG. 10B illustrates another example of changing an animation of a visual object in a virtual environment according to an embodiment of the disclosure.

The virtual environment may represent a virtual space of a metaverse service provided through an electronic device (e.g., the electronic device 101 of FIG. 1). The visual object may represent an avatar in the virtual environment corresponding to a user. The user may include a user of an external electronic device different from the electronic device. Hereinafter, the method of FIGS. 10A and 10B may be performed through the electronic device (e.g., the electronic device 101 of FIG. 1). For example, the method of FIGS. 10A and 10B may be performed by the processor of the electronic device (e.g., the processor 120 of FIG. 1).

FIGS. 10A and 10B illustrate examples of changing an animation of a visual object corresponding to the user of the external electronic device, when the user of the external electronic device utters inappropriately.

Referring to FIG. 10A, a virtual environment 1000 may be displayed on the display (e.g., the display module 160 of FIG. 1) of the electronic device 101. The virtual environment 1000 may include a first visual object 1010, a second visual object 1020, and a third visual object 1030. According to an embodiment, while the second visual object 1020 utters, an animation 1025 of the second visual object 1020 may be identified to represent a ridiculous expression. The ridiculous expression may represent a change in a specific facial expression and facial color. In other words, the processor may change the animation 1025 of the second visual object 1020 when the user corresponding to the second visual object 1020 utters an inappropriate expression. Accordingly, the user of the electronic device 101 may feel less discomfort even if the second visual object 1020 utters such an inappropriate expression. Further, the user of the second visual object 1020 may recognize that an inappropriate expression is publicly displayed to other users within the virtual environment 1000 and may not use such an inappropriate expression.

Referring to FIG. 10B, a virtual environment 1050 may be displayed on the display (e.g., the display module 160 of FIG. 1) of the electronic device 101. The virtual environment 1050 may include a first visual object 1060, a second visual object 1070, and a third visual object 1080. According to an embodiment, the processor may identify an animation of the user's visual object, based on information on the user's reputation. When the user's reputation of the second visual object 1070 is not so good, an animation of a shape of the second visual object 1070 and an animation of a voice output by the second visual object 1070 may be changed. The animation of the shape may be an animal character (e.g., chicken shape), and the animation of the voice may represent the animal's sound (e.g., cluck). When the reputation is not good, it may indicate that the frequency of use of such inappropriate expressions in the user record of the second visual object 1070 identified through the software application is high. As described above, when the animation of the second visual object 1070 is changed, the user of the second visual object 1070 may have some difficulty in communicating with other users (e.g., the user of the first visual object 1060 and the user of the third visual object 1080) according to the changed animation, so that the use of the inappropriate expressions may be refrained.

FIG. 11 illustrates an example of a method for representing a visual object in a virtual environment according to an embodiment of the disclosure.

The virtual environment may represent a virtual space of a metaverse service provided through an electronic device (e.g., the electronic device 101 of FIG. 1). The visual object may represent an avatar in the virtual environment corresponding to the user. The user may include a user of an external electronic device different from the electronic device. Hereinafter, the method of FIG. 11 may be performed through the electronic device (e.g., the electronic device 101 of FIG. 1). For example, the method of FIG. 11 may be performed by the processor of the electronic device (e.g., the processor 120 of FIG. 1).

Referring to FIG. 11, the processor may receive input information 1110. The input information 1110 may be obtained with respect to a visual object corresponding to a user of the external electronic device, while the virtual environment is displayed. The processor may identify at least one word 1120 based on the input information 1110. For example, the at least one word 1120 may include "What the fuxx". The processor may identify whether the at least one word 1120 includes an inappropriate expression. For example, the processor may identify whether an inappropriate expression is included by comparing the at least one word 1120 with a reference value. The processor may identify that a portion 1130 of the at least one word 1120 corresponds to the reference value. The reference value may indicate a value corresponding to an expression such as abusive language, profanity, or causing sexual shame. The processor may change a value of the portion 1130. For example, the processor may identify the changed portion 1140 representing "Buck" for the value of the portion 1130 representing "fuxx". The values of the part 1130 may include a consonant or vowel. When a specific value (e.g., 'F') of the existing portion 1130 is a consonant, the changed specific value (e.g., 'B') may be a consonant, and when a specific value of the existing portion 1130 is a vowel, the changed specific value may be a vowel. The processor may identify at least one changed word 1150 including the changed portion 1140. The processor may identify an animation 1165 indicating that at least one word 1150 is uttered, based on the at least one changed word 1150. The processor may display the animation 1165 through the visual object 1160. For example, the processor may display the visual object 1160 of the animation 1165 on a display.

According to an embodiment, the processor may output a voice at the same time of displaying the changed animation 1165 of the visual object 1160. For example, the processor may identify an animation for a voice for the visual object 1160, and may output an animation for the identified voice together with the animation 1165 through an output device (e.g., the sound output module 155 of FIG. 1). According to an embodiment, the animation for the voice may represent a voice corresponding to at least one word 1120 identified based on the input information 1110 to be changed. When the animation for the voice is a voice corresponding to the at least one word 1120, it is combined with the animation 1165 of the visual object 1160, so that the user of the electronic device may substantially identify the voice as a voice different from the voice corresponding to the at least one word 1120. For example, when a voice corresponding to the at least one word 1120 outputs "What the fuxx" and the animation 1165 utters "What the buck", the user of the electronic device may identify it as uttering "What the buck". The above phenomenon may be referred to as McGurk effect. Accordingly, the user of the electronic device may recognize an inappropriate expression as other sound, so that less discomfort may be felt in using the virtual environment. Alternatively, the animation of the voice may represent a voice corresponding to the changed at least one word 1150. According to an embodiment, the animation of the voice may be identified according to whether the user of the electronic device looks at the display of the electronic device 101. When the user of the electronic device looks at the display, even if a word including an inappropriate expression (e.g., at least one word 1120) is output as a voice as it is, it is combined with an animation 1165 representing that the word (e.g., at least one word 1150) changed from an inappropriate expression is uttered, so that the user of the electronic device may recognize that other voice is expressed. In contrast, when the user of the electronic device does not look at the display, a word (e.g., at least one word 1120) including an inappropriate expression is not output as a voice as it is, and the changed word (e.g., at least one word 1150) is output as a voice so that the user is not offended.

Referring to the above description, the device and method according to an embodiment of the present disclosure may change an animation of a visual object or change the output voice in expressing the visual object in the virtual environment. Accordingly, the device and method according to an embodiment of the present disclosure can reduce discomfort factors in a metaverse service provided through the virtual environment, thereby providing an optimized user experience. Further, the device and method according to an embodiment of the present disclosure can increase the user's immersion in the metaverse service provided through the virtual environment.

As described above, a wearable device 101 may include a display 160. The wearable device 101 may include a processor 120. The processor 120 may be configured to display, via the display 160, a virtual environment including a visual object. The processor 120 may be configured to identify input information obtained for the visual object, while the virtual environment is displayed. The processor 120 may be configured to identify at least one word from the input information. The processor 120 may be configured to identify that a first value represented by a portion of the at least one word corresponds to a reference value. The processor 120 may be configured to change a value represented by the portion of the at least one word from the first value to a second value. The processor 120 may be configured to display an animation representing utterance of the at least one word including the portion indicating the second value, via the display 160 in the virtual environment through the visual object.

According to an embodiment, the input information may include at least one of first information in which a user of another wearable device different from the wearable device 101 inputs with respect to the virtual object in the virtual environment, or second information displayed in a server related to a software application displaying the virtual environment. The reference value may include a predetermined value by a user of the electronic device or a value representing an expression unavailable in the virtual environment.

According to an embodiment, the processor 120 may be configured to receive a result of the first information from the another wearable device. The result may include information for representing whether the portion of the at least one word identified from the first information input by a user of the another wearable device corresponds to a value representing an expression unavailable in the virtual environment of the reference value.

According to an embodiment, the processor 120 may be configured to identify information representing a relationship between the user of the another wearable device corresponding to the another visual object in the virtual environment and the user of the wearable device 101, using the software application. The processor 120 may be configured to identify a change level of the animation as a first level, in case that the information representing the relationship is less than another reference value. The processor 120 may be configured to identify the change level of the animation as a second level lower than the first level, in case that the information representing the relationship is greater than or equal to the another reference value. The processor 120 may be configured to display the animation of the identified change level through the visual object.

According to an embodiment, the processor 120 may be configured to identify whether the portion of the at least one word identified from the first information corresponds to a value predetermined by the user of the wearable device 101.

According to an embodiment, the processor 120 may be configured to perform a processing of the input information including text information, voice information, and video information. The processing may include identifying the at least one word by normalizing for identifying a character portion other than a symbol in the text information. The processing may include identifying the at least one word by obtaining at least one phoneme for the voice information. The processing may include identifying the at least one word based on movement information of a lip included in the video information.

According to an embodiment, the value represented by the portion may include a consonant or a vowel. When the first value is a first consonant, the second value may be a second consonant different from the first consonant. When the first value is a first vowel, the second value may be a second vowel different from the first vowel.

According to an embodiment, the processor 120 may be configured to obtain information on a space of the virtual environment, using a software application displaying the virtual environment. The processor 120 may be configured to identify the animation, based on information on the space of the virtual environment.

According to an embodiment, the wearable device 101 may further include a speaker. The processor 120 may be configured to output the at least one word including the portion indicating the first value through the speaker, while displaying the animation through the visual object.

According to an embodiment, the processor 120 may be configured to identify a region being capable of identifying in the virtual environment corresponding to a direction viewed by the user of the wearable device 101. The animation may be applied to the visual object in the region.

As described above, a method performed by a wearable device 101 may include displaying a virtual environment including a visual object via a display 160 of the wearable device 101. The method may include identifying input information obtained for the visual object, while the virtual environment is displayed. The method may include identifying at least one word from the input information. The method may include identifying that a first value represented by a portion of the at least one word corresponds to a reference value. The method may include changing a value represented by the portion of the at least one word from the first value to a second value. The method may include displaying, via the display 160, an animation representing uttering the at least one word including the second word through the visual object in the virtual environment.

According to an embodiment, the input information may include at least one of first information in which a user of another wearable device different from the wearable device 101 inputs with respect to another virtual object in the virtual environment, or second information displayed in a server related to a software application displaying the virtual environment. The reference value may include a predetermined value by a user of the wearable device 101 or a value representing an expression unavailable in the virtual environment

According to an embodiment, the method may include receiving a result of the first information from the another wearable device. The result may include information for representing whether the portion of the at least one word identified from the first information input by the user of the another wearable device corresponds to a value for representing an expression unavailable in the virtual environment of the reference value.

According to an embodiment, the method may include identifying information representing a relationship between the user of the another wearable device corresponding to the another visual object in the virtual environment and the user of the wearable device 101, using the software application. The method may include identifying a change level of the animation as a first level, in case that the information representing the relationship is less than another reference value. The method may include identifying the change level of the animation as a second level lower than the first level, in case that the information representing the relationship is greater than or equal to the another reference value. The method may include displaying the animation of the identified change level through the visual object.

According to an embodiment, the method may include identifying whether the portion of the at least one word identified from the first information corresponds to a value predetermined by the user of the wearable device 101.

According to an embodiment, the method may include performing a processing of the input information including text information, voice information, and video information. The processing may include identifying the at least one word by normalizing for identifying a character portion other than a symbol in the text information. The processing may include identifying the at least one word by obtaining at least one phoneme of the voice information. The processing may include identifying the at least one word based on movement information of a lip included in the video information.

According to an embodiment, the value represented by the portion may include a consonant or a vowel. When the first value is a first consonant, the second value may be a second consonant different from the first consonant. When the first value is a first vowel, the second value may be a second vowel different from the first vowel.

According to an embodiment, the method may include obtaining information on a space of the virtual environment using a software application displaying the virtual environment. The method may include identifying the animation based on information on the space of the virtual environment.

According to an embodiment, the method may include outputting the at least one word including the portion representing the first value via a speaker of the wearable device 101, while displaying the animation through the visual object.

According to an embodiment, the method may include identifying a region being capable of identifying in the virtual environment corresponding to a direction viewed by the user of the wearable device 101. The animation may be applied to the visual object in the region.

As described above, an electronic device 101 may include a display 160. The electronic device 101 may include a processor 120. The processor 120 may be configured to display, via the display 160, a virtual environment including a visual object. The processor 120 may be configured to obtain voice information with respect to the visual object, while the virtual environment is displayed. The processor 120 may be configured to identify at least one word from the voice information. The processor 120 may be configured to identify that a first word from among the at least one word corresponds to a reference value. The processor 120 may be configured to, based on the first word corresponding to the reference value, change the first word to a second word. The processor 120 may be configured to display, via the display 160, an animation representing uttering the at least one word including the second word through the visual object in the virtual environment.

According to an embodiment, the voice information may include at least one of first information in which a user of another electronic device different from the electronic device 101 inputs with respect to the virtual object in the virtual environment, or second information displayed in a server related to a software application displaying the virtual environment. The reference value may include a predetermined value by a user of the electronic device 101 or a value representing an expression unavailable in the virtual environment. The virtual environment may be displayed based on information received from the server. The visual object may represent an avatar corresponding to the user of the another electronic device.

According to an embodiment, the processor 120 may be configured to receive, from the another electronic device, a result of the first information. The result may include information for representing whether the first word of the at least one word identified from the first information corresponds to the reference value representing an expression unavailable in the virtual environment.

According to an embodiment, the processor 120 may be configured to identify information representing a relationship between the user of the electronic device 101 and the user of the another electronic device corresponding to the visual object in the virtual environment, using the software application. The processor 120 may be configured to identify a change level of the animation as a first level, in case that the information representing the relationship is less than another reference value. The processor 120 may be configured to identify the change level of the animation as a second level lower than the first level, in case that the information representing the relationship is greater than or equal to the another reference value. The processor 120 may be configured to display the animation of the identified change level through the visual object.

According to an embodiment, the processor 120 may be configured to identify whether the first word of the at least one word identified from the first information corresponds to a predetermined value by the user of the electronic device 101.

According to an embodiment, the processor 120 may be configured to perform a processing of input information including the voice information. The processing may include identifying the at least one word by obtaining at least one phoneme for the voice information. The input information may include text information, the voice information, and video information.

According to an embodiment, the value represented by a part of the first word may include a consonant or a vowel. In case that the part of the first word is a first consonant, a portion of the second word corresponding to the part is a second consonant different from the first consonant. In case that the part of the first word is a first vowel, a portion of the second word corresponding to the part is a second vowel different from the first vowel.

According to an embodiment, the processor 120 may be configured to obtain information on a space of the virtual environment, using a software application displaying the virtual environment. According to an embodiment, the processor 120 may be configured to identify the animation based on the information on the space of the virtual environment.

According to an embodiment, the electronic device 101 may further comprise a speaker. The processor 120 may be configured to output, via the speaker, the at least one word including the first word, while displaying the animation through the visual object.

According to an embodiment, the processor 120 may be configured to identify a region being capable of identifying in the virtual environment corresponding to a direction viewed by a user of the electronic device. The animation may be applied to the visual object in the region.

As described above, a method performed by an electronic device 101 may include displaying, via a display 160 of the electronic device 101, a virtual environment including a visual object. The method may include obtaining voice information with respect to the visual object, while the virtual environment is displayed. The method may include identifying at least one word from the voice information. The method may include identifying that a first word from among the at least one word corresponds to a reference value. The method may include, based on the first word corresponding to the reference value, changing the first word to a second word. The method may include displaying, via the display, an animation representing uttering the at least one word including the second word through the visual object in the virtual environment.

According to an embodiment, the input information may include at least one of first information in which a user of another wearable device different from the wearable device 101 inputs with respect to another virtual object in the virtual environment, or second information displayed in a server related to a software application displaying the virtual environment. The reference value may include a predetermined value by a user of the wearable device 101 or a value representing an expression unavailable in the virtual environment. The virtual environment may be displayed based on information received from the server. The visual object represents an avatar corresponding to the user of the another electronic device.

According to an embodiment, the method may include receiving a result of the first information from the another wearable device. The result may include information for representing whether the first word of the at least one word identified from the first information corresponds to the reference value representing an expression unavailable in the virtual environment.

According to an embodiment, the method may include identifying information representing a relationship between the user of the electronic device 101 and the user of the another electronic device corresponding to the visual object in the virtual environment, using the software application. The method may include identifying a change level of the animation as a first level, in case that the information representing the relationship is less than another reference value. The method may include identifying the change level of the animation as a second level lower than the first level, in case that the information representing the relationship is greater than or equal to the another reference value. The method may include displaying the animation of the identified change level through the visual object.

According to an embodiment, the method may include identifying whether the first word of the at least one word identified from the first information corresponds to a predetermined value by the user of the electronic device 101.

According to an embodiment, the method may include performing a processing of input information including the voice information. The processing may include identifying the at least one word by obtaining at least one phoneme for the voice information. The input information may include text information, the voice information, and video information.

According to an embodiment, the value represented by a part of the first word may include a consonant or a vowel. In case that the part of the first word is a first consonant, a portion of the second word corresponding to the part is a second consonant different from the first consonant. In case that the part of the first word is a first vowel, a portion of the second word corresponding to the part is a second vowel different from the first vowel.

According to an embodiment, the method may include obtaining information on a space of the virtual environment, using a software application displaying the virtual environment. The method may include identifying the animation based on the information on the space of the virtual environment.

According to an embodiment, the electronic device 101 may further comprise a speaker. The method may include outputting, via the speaker, the at least one word including the first word, while displaying the animation through the visual object.

According to an embodiment, the method may include identifying a region being capable of identifying in the virtual environment corresponding to a direction viewed by a user of the electronic device. The animation may be applied to the visual object in the region.

As described above, a non-transitory computer readable storage medium, when executed by a processor 120 of an electronic device 101 comprising a display 160, may store one or more programs including instructions that cause to display, via the display 160, a virtual environment including a visual object. The non-transitory computer readable storage medium, when executed by the processor 120, may store one or more programs including instructions that cause to obtain voice information with respect to the visual object, while the virtual environment is displayed. The non-transitory computer readable storage medium, when executed by the processor 120, may store one or more programs including instructions that cause to identify at least one word from the voice information. The non-transitory computer readable storage medium, when executed by the processor 120, may store one or more programs including instructions that cause to identify that a first word from among the at least one word corresponds to a reference value. The non-transitory computer readable storage medium, when executed by the processor 120, may store one or more programs including instructions that cause to, based on the first word corresponding to the reference value, change the first word to a second word. The non-transitory computer readable storage medium, when executed by the processor 120, may store one or more programs including instructions that cause to display, via the display 160, an animation representing uttering the at least one word including the second word through the visual object in the virtual environment.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment of the disclosure are not limited to those described above.

It should be appreciated that various embodiments and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled to/with", or "connected to/with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic," "logic block,", "unit", "part,", "portion" or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (120); and
a processor (120),
wherein the processor (120) is configured to:
display, via the display (160), a virtual environment including a visual object,
obtain voice information with respect to the visual object while the virtual environment is displayed,
identify at least one word from the voice information,
identify that a first word from among the at least one word corresponds to a reference value,
based on the first word corresponding to the reference value, change the first word to a second word, and
display, via the display (160), an animation representing uttering the at least one word including the second word through the visual object in the virtual environment.

2. The electronic device (101) of claim 1,
wherein the voice information includes at least one of first information in which a user of another electronic device different from the electronic device (101) inputs with respect to the virtual object in the virtual environment, or second information displayed in a server related to a software application displaying the virtual environment,
wherein the reference value includes a predetermined value by a user of the electronic device (101) or a value representing an expression unavailable in the virtual environment,
wherein the virtual environment is displayed based on information received from the server,
wherein the visual object represents an avatar corresponding to the user of the another electronic device.

3. The electronic device (101) of claim 2,
wherein the processor (120) is configured to:
receive, from the another electronic device, a result of the first information,
wherein the result includes information for representing whether the first word of the at least one word identified from the first information corresponds to the reference value representing an expression unavailable in the virtual environment.

4. The electronic device (101) of claim 3,
wherein the processor (120) is configured to:
identify information representing a relationship between the user of the electronic device (101) and the user of the another electronic device corresponding to the visual object in the virtual environment,
in case that the information representing the relationship is less than another reference value, identify a change level of the animation as a first level,
in case that the information representing the relationship is greater than or equal to the another reference value, identify the change level of the animation as a second level lower than the first level,
display the animation with the identified change level through the visual object.

5. The electronic device (101) of claim 2,
wherein the processor (120) is configured to:
identify whether the first word of the at least one word identified from the first information corresponds to a predetermined value by the user of the electronic device (101).

6. The electronic device (101) of claim 1,
wherein the processor (120) is configured to:
perform a processing of input information including the voice information,
wherein the processing includes identifying the at least one word by obtaining at least one phoneme for the voice information,
wherein the input information includes text information, the voice information, and video information.

7. The electronic device (101) of claim 1,
wherein the value represented by a part of the first word includes a consonant or a vowel,
wherein, in case that the part of the first word is a first consonant, portion of the second word corresponding to the part is a second consonant different from the first consonant,
wherein, in case that the part of the first word is a first vowel, portion of the second word corresponding to the part is a second vowel different from the first vowel.

8. The electronic device (101) of claim 1,
wherein the processor (120) is configured to:
obtain information on a space of the virtual environment by using a software application displaying the virtual environment,
identify the animation based on the information on the space of the virtual environment.

9. The electronic device (101) of claim 1,
wherein the electronic device (101) further comprises a speaker,
wherein the processor (120) is configured to:
output, via the speaker, the at least one word including the first word while displaying the animation through the visual object.

10. The electronic device (101) of claim 1,
wherein the processor (120) is configured to:
identify a region being capable of identifying in the virtual environment corresponding to a direction viewed by a user of the electronic device (101),
wherein the animation is applied to the visual object in the region.

11. A method performed by an electronic device (101) comprising:
displaying, via a display of the electronic device (101), a virtual environment including a visual object,
obtaining voice information with respect to the visual object while the virtual environment is displayed,
identifying at least one word from the voice information,
identifying that a first word from among the at least one word corresponds to a reference value,
based on the first word corresponding to the reference value, changing the first word to a second word, and
displaying, via the display (160), an animation representing uttering the at least one word including the second word through the visual object in the virtual environment.

12. The method of claim 11,
wherein the voice information includes at least one of first information in which a user of another electronic device different from the electronic device (101) inputs with respect to the virtual object in the virtual environment, or second information displayed in a server related to a software application displaying the virtual environment,
wherein the reference value includes a predetermined value by a user of the electronic device (101) or a value representing an expression unavailable in the virtual environment,
wherein the virtual environment is displayed based on information received from the server,
wherein the visual object represents an avatar corresponding to the user of the another electronic device.

13. The method of claim 12, comprising:
receiving, from the another electronic device, a result of the first information,
wherein the result includes information for representing whether the first word of the at least one word identified from the first information corresponds to the reference value representing an expression unavailable in the virtual environment.

14. The method of claim 13, comprising:
identifying information representing a relationship between the user of the electronic device (101) and the user of the another electronic device corresponding to the visual object in the virtual environment,
in case that the information representing the relationship is less than another reference value, identifying a change level of the animation as a first level,
in case that the information representing the relationship is greater than or equal to the another reference value, identifying the change level of the animation as a second level lower than the first level,
displaying the animation with the identified change level through the visual object.

15. A non-transitory computer readable storage medium, when executed by a processor (120) of an electronic device (101) comprising a display, storing one or more programs including instructions cause to:
display, via the display (160), a virtual environment including a visual object,
obtain voice information with respect to the visual object while the virtual environment is displayed,
identify at least one word from the voice information,
identify that a first word from among the at least one word corresponds to a reference value,
based on the first word corresponding to the reference value, change the first word to a second word, and
display, via the display (160), an animation representing uttering the at least one word including the second word through the visual object in the virtual environment.
